# FASCICULE DE BREVET EUROPEEN

(11) **EP 0 634 724 B1**
(45) Date de publication et mention de la délivrance du brevet: **27.10.1999**
(21) Numéro de dépôt: 94401596.5
(22) Date de dépôt: 11.07.1994
(51) Int. Cl.: G06F 15/16, G06F 15/80

(54) **Ensemble informatique à mémoire partagée**
Verarbeitungssystem mit gemeinschaftlichem Speicher
Processing-system with shared memory

(30) Priorité: 15.07.1993 FR 9308710
(43) Date de publication de la demande: 18.01.1995
(73) Titulaire: BULL S.A., 92800 Puteaux (FR)
(72) Inventeur: Chehaibar, Ghassan, F-78340 Les Clayes Sous Bois (FR); Autechaud, Jean-François, F-75004 Paris (FR)

(56) Documents cités:
- EP-A- 0 439 693
- US-A- 4 644 496
- 10TH ANNUAL INTERNATIONAL CONFERENCE ON COMPUTER ARCHITECTURE CONFERENCE PROCEEDINGS, 13 Juin 1983, STOCKHOLM, SWEDEN pages 334 - 340 L. PHILIPSON ET AL 'A communication structure for a multiprocessor computer with distributed global memory'
- 10TH INTERNATIONAL CONFERENCE ON DISTRIBUTED COMPUTING SYSTEMS, 28 Mai 1990, PARIS, FRANCE pages 270 - 277 K. PADMANABHAN 'Hierarchical communication in cube-connected multiprocessors'

## Description

La présente invention concerne un ensemble informatique à mémoire partagée.

On connaît des ensembles informatiques à mémoire partagée comportant des processeurs regroupés selon des noeuds associés entre eux par des liaisons. Ainsi, par exemple, le brevet US 4 644 496 décrit un réseau de noeuds regroupés par quatre en unité. Dans chacune des unités, chacun des noeuds est relié directement à tous les autres noeuds, et chaque unité ne dispose que d'une connection directe avec une autre unité. Un des problèmes principaux des ensembles de ce type est la non-linéarité des performances de l'ensemble informatique en fonction du nombre de processeurs. En effet, le nombre de messages échangés entre les processeurs et les différentes parties de mémoire augmente plus rapidement que le nombre de processeurs d'autant plus que le partage de la mémoire entre les différents processeurs implique l'utilisation de messages de cohérence dont le nombre s'accroît très rapidement lorsqu'on augmente le nombre de processeurs. On a, certes, envisagé d'augmenter le nombre de liaisons afin de permettre un débit global de messages plus important. Toutefois, l'augmentation du nombre de liaisons augmente très rapidement le coût de l'ensemble et augmente également la complexité des protocoles de cohérence pour éviter que deux messages contradictoires ne circulent simultanément sur deux liaisons séparées.

Un but de l'invention est de proposer un ensemble informatique ayant une structure permettant d'améliorer la proportionnalité des performances de l'ensemble par rapport au nombre de processeurs.

En vue de la réalisation de ce but, on propose selon l'invention un système informatique à mémoire partagée tel que défini dans la revendication 1.

Ainsi, pour une configuration inférieure à la configuration maximale, en particulier pour une configuration comportant un nombre de noeuds inférieur à la taille critique, c'est-à-dire un nombre de noeuds pour lequel les débits de messages risquent d'être très mal répartis sur les différentes liaisons, ce risque de mauvaise répartition est compensé par le doublement des liaisons. Au contraire, pour une configuration supérieure à la taille critique, c'est-à-dire pour une configuration pour laquelle le nombre de noeuds est suffisamment important pour que l'on puisse espérer une répartition statistiquement homogène des débits de messages au moins dans des proportions acceptables, on minimise le coût de l'ensemble en assurant une liaison simple entre les sous-ensembles. En outre le doublement des liaisons sur les sous-ensembles permet de garantir une continuité de fonctionnement de chaque sous-ensemble même en cas de mise hors service d'une liaison, ce qui est particulièrement important lorsque l'ensemble informatique a une configuration limitée à un sous ensemble.

Selon une version avantageuse de l'invention, le système est pourvu des caractéristiques telles que définies dans les revendications 2 et 3. On a constaté que l'on augmentait ainsi de façon intéressante le débit des messages entre des noeuds adjacents sans augmenter de façon indue la complexité des protocoles de cohérence.

Selon un autre aspect avantageux de l'invention, le système présente les caractéristiques telles que définies dans la revendication 4. Ainsi, sans augmenter la complexité des protocoles de cohérence, on assure une liaison entre les noeuds de façon telle que la communication entre deux noeuds nécessite au maximum l'utilisation de deux liaisons successives quelle que soit la position relative des deux noeuds en communication.

D'autres caractéristiques et avantages de l'invention apparaîtront encore à la lecture de la description qui suit d'un mode de réalisation particulier non limitatif de l'ensemble selon l'invention en relation avec les figures parmi lesquelles :
- la figure 1 est un diagramme schématique illustrant la structure générale de l'ensemble informatique selon l'invention,
- la figure 2 est un diagramme schématique illustrant la structure d'un noeud selon un mode de réalisation de l'invention,
- la figure 3 illustre une variante de réalisation de la structure du noeud de la figure 2,
- la figure 4 illustre de façon schématique partielle les connexions des liaisons séries au sein d'un super noeud et avec un noeud des autres super noeuds de l'ensemble,
- la figure 5 illustre de façon schématique un exemple de structure d'un noeud dans le cas d'une configuration inférieure à la configuration maximale,
- la figure 6 illustre de façon schématique la structure de l'ensemble informatique dans le cas d'une configuration comportant seulement deux noeuds.

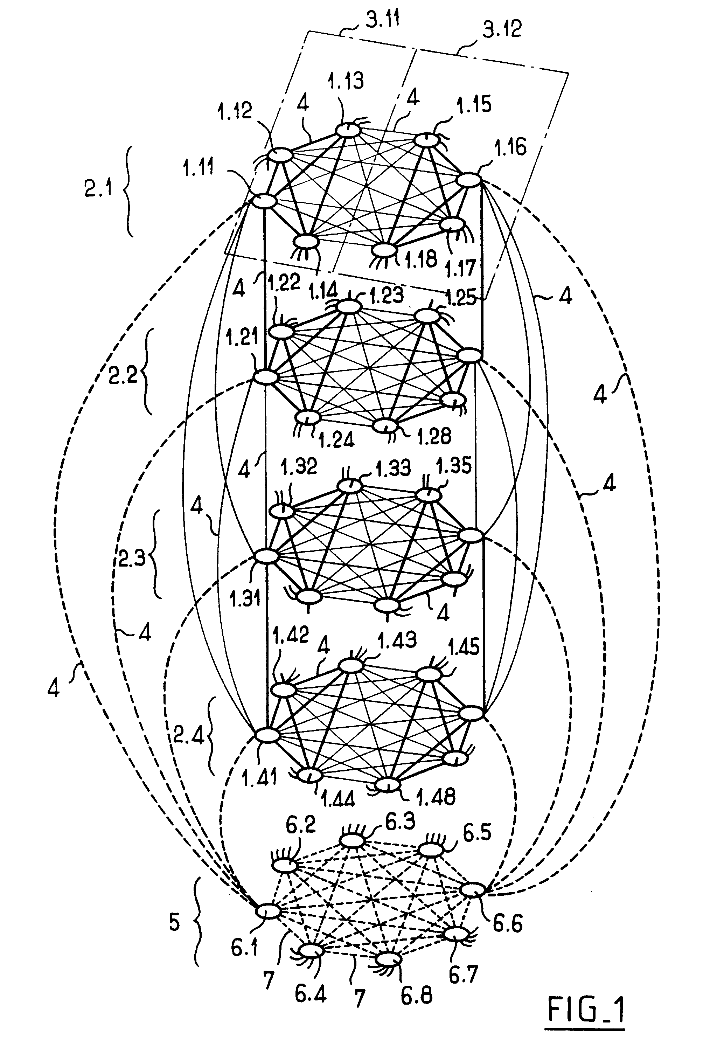

En référence à la figure 1, l'ensemble informatique selon l'invention est un ensemble à mémoire partagée, c'est-à-dire un ensemble dans lequel la mémoire générale à laquelle tous les processeurs doivent pouvoir avoir accès est répartie selon des mémoires locales auxquelles chacun des processeurs peut avoir accès de façon directe ou indirecte, les processeurs étant eux-mêmes regroupés selon des noeuds associés entre eux par des liaisons. Sur la figure 1, les noeuds de processeurs comportent la référence numérique générale 1 et, selon un aspect de l'invention, l'ensemble des noeuds 1 est divisé selon des super noeuds portant la référence numérique générale 2. L'ensemble illustré comporte quatre super noeuds 2 comprenant chacun huit noeuds 1. Pour permettre une identification particulière des noeuds et des super noeuds, la référence générale est associée à une référence particulière. Ainsi, le premier super noeud porte la référence complète 2.1, le deuxième super noeud porte la référence complète 2.2, le troisième super noeud porte la référence complète 2.3 et le quatrième super noeud porte la référence complète 2.4. Au sein de chaque super noeud 2, chaque noeud 1 porte une référence particulière l'identifiant d'une part par le super noeud auquel il appartient (premier chiffre de la référence particulière) et d'autre part par son numéro d'ordre dans le super noeud (second chiffre de la référence particulière). Ainsi, le premier noeud du premier super noeud porte la référence complète 1.11, le second noeud du premier super noeud porte la référence complète 1.12, le troisième noeud du premier super noeud porte la référence complète 1.13.... Le premier noeud du second super noeud 2.2 porte la référence complète 1.21, le second noeud du second super noeud 2.2 porte la référence complète 1.22.....

Chaque super noeud 2 est divisé en deux sous-ensembles 3 matérialisés par un trait pointillé mixte pour le super noeud 2.1. Sur la figure 1, le premier sous-ensemble du super noeud 2.1 qui inclut les noeuds 1.11, 1.12, 1.13 et 1.14, porte la référence complète 3.11 et le second sous-ensemble qui comprend les noeuds 1.15, 1.16, 1.17 et 1.18, porte la référence complète 3.12. les noeuds sont reliés les uns aux autres par des liaisons séries 4 illustrées par un trait continu épais lorsqu'il s'agit d'une liaison série double et par un trait continu fin lorsqu'il s'agit d'une liaison série simple. On notera qu'une liaison série simple au sens de la présente description est, de façon habituelle, constituée de deux paires différentielles blindées formant une liaison logique unique et représentée à ce titre par un trait simple sur les figures.

Selon l'invention les noeuds d'un sous-ensemble 3 sont reliés entre eux par des liaisons séries doubles et sont reliés aux noeuds d'un sous-ensemble adjacent du même super noeud 2 par des liaisons séries simples. Ainsi, le noeud 1.11 est relié par des liaisons séries doubles à chacun des noeuds 1.12, 1.13 et 1.14 du même sous-ensemble 3.11, et par des liaisons simples aux noeuds 1.15, 1.16, 1.17 et 1.18 du sous-ensemble adjacent 3.12 du même super noeud 2.1.

Dans le mode de réalisation préféré illustré, les super noeuds 2 sont reliés par paires par des liaisons séries doubles associant chaque noeud d'un super noeud à un noeud correspondant d'un autre super noeud. Ainsi, les deux super noeuds 2.1 et 2.2 sont appairés en établissant une liaison double entre le noeud 1.11 et le noeud 1.21, entre le noeud 1.12 et le noeud 1.22..... ces liaisons doubles n'étant marquées sur la figure que pour les noeuds latéraux extrêmes de la représentation schématique illustrée et étant marqués seulement par un départ de trait épais pour les autres noeuds. De la même façon, les super noeuds 2.3 et 2.4 sont appairés par des liaisons double reliant respectivement le noeud 1.31 au noeud 1.41, le noeud 1.32 au noeud 1.42....

Par ailleurs, chaque paire de super noeuds associés est reliée à une autre paire de super noeuds associés par des liaisons séries simples reliant chaque noeud d'une paire à deux noeuds correspondants de l'autre paire. Ainsi, le noeud 1.11 est relié par une liaison série simple au noeud 1.31 et au noeud 1.41... le noeud 1.21 est également relié par une liaison série simple au noeud 1.31 et au noeud 1.41.... de même que précédemment pour les liaisons doubles entre deux super noeuds appairés, les liaisons simples entre deux paires de super noeuds ont été marquées sur la figure seulement pour les noeuds latéraux extrêmes, les autres liaisons simples étant seulement marquées par un départ de trait fin à partir de chaque noeud.

Selon le mode de réalisation préféré illustré, l'ensemble informatique selon l'invention comporte en outre un super noeud 5 d'organes d'entrée/sortie portant la référence générale 6, chaque organe d'entrée/sortie 6 étant relié par une liaison série 4 à un noeud correspondant de chacun des super noeuds. Ainsi, sur la figure 1, les organes d'entrée/sortie portent respectivement les références numériques complètes 6.1, 6.2..... L'organe d'entrée/sortie 6.1 est relié par des liaisons séries simples 4 aux noeuds 1.11, 1.21, 1.31 et 1.41 ; l'organe d'entrée/sortie 6.2 est relié aux noeuds 1.12, 1.22, 1.32 et 1.42.... et, au sein du super noeud 5, les organes d'entrée/sortie sont également reliés entre eux par une liaison séries simples 7. De même que précédemment les liaisons séries simples entre les organes d'entrée/sortie ont toutes été représentées sur la figure, tandis que les liaisons séries avec les noeuds de processeurs ont été représentées seulement pour les noeuds latéraux extrêmes. On notera que pour une plus grande clarté de l'illustration, les organes d'entrée/sortie 6 ont été regroupés à la partie inférieure du diagramme schématique de la figure 1 mais, dans la réalité, ils seront généralement répartis à différents niveaux de la machine comportant l'ensemble informatique selon l'invention.

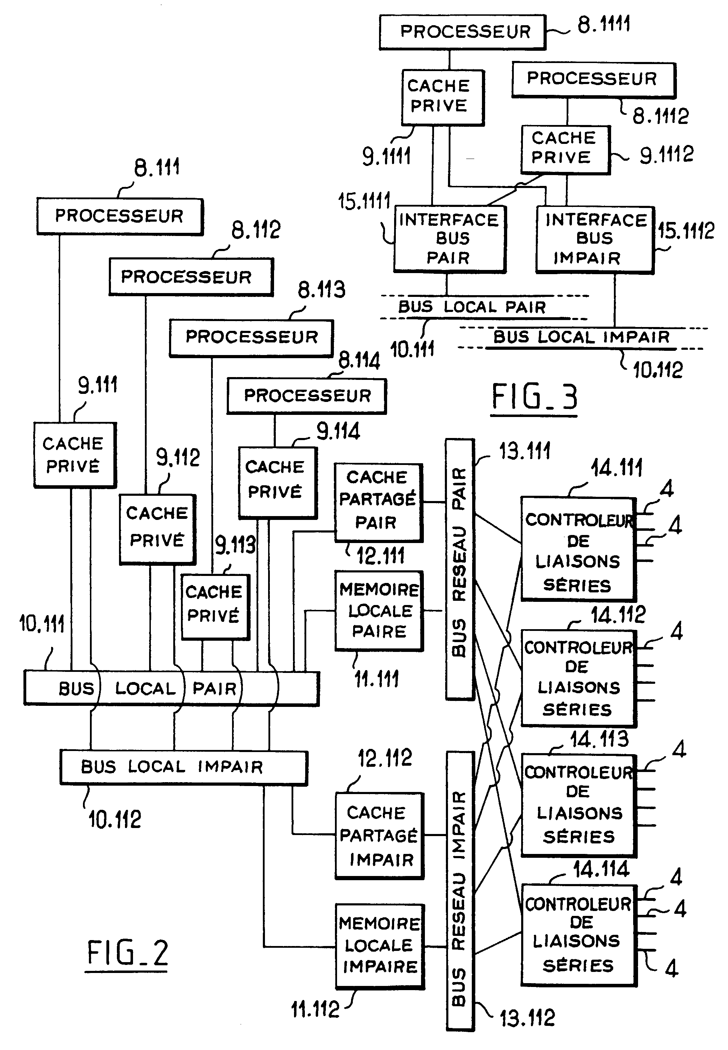

La figure 2 illustre de façon schématique la structure d'un mode de réalisation d'un noeud selon l'invention. Selon ce mode de réalisation, chaque noeud comporte quatre processeurs comportant la référence générale 8 et une référence particulière permettant d'identifier par rapport au noeud auquel il appartient (deux premiers chiffres de la référence particulière), et par son numéro d'ordre dans le noeud (dernier chiffre de la référence particulière). On supposera par la suite que la figure 2 illustre la structure du noeud 1.11 et, pour identifier chacun des processeurs en relation avec ce noeud, ceux-ci portent les références numériques complètes 8.111,8.112, 8.113 et 8.114. Par analogie on comprendra que pour le noeud 1.43 par exemple, les références complètes des processeurs seront 8.431, 8.432, 8.433 et 8.434.

Chaque processeur est associé à un cache privé portant la référence générale 9, et respectivement les références complètes 9.111, 9.112, 9.113 et 9.114. On sait que le terme de cache est utilisé de façon habituelle pour désigner une mémoire contenant des informations qui sont des copies d'une information détenue de façon originale à une adresse de la mémoire générale de l'ensemble informatique afin qu'un processeur d'instructions particulier puisse utiliser cette information de façon plus rapide que s'il devait interroger systématiquement la mémoire générale à chaque fois qu'il exécute une instruction mettant en oeuvre cette information. Au sens de la présente description, le terme de cache privé sera utilisé pour un cache auquel un processeur d'instructions est relié de façon directe. Chacun des caches privés 9 est relié à deux bus locaux portant la référence générale 10 et, respectivement, les références complètes 10.111 et 10.112.

Au sens de la présente description, le terme de mémoire locale est utilisé pour une mémoire comportant une partie de la mémoire générale, c'est-à-dire une partie des informations originales accessibles par l'ensemble des microprocesseurs. Le terme de cache partagé est utilisé pour désigner une mémoire qui contient des copies d'informations contenues dans les mémoires locales des autres noeuds de l'ensemble informatique et qui est destinée à être utilisée par les différents processeurs du noeud dans lequel le cache partagé est disposé. De façon habituelle les caches privés, les caches partagés et les mémoires locales comprennent des processeurs de gestion qui n'ont pas été représentés sur les figures.

Lorsqu'une information nécessaire à l'un des processeurs n'est pas disponible dans le cache privé auquel il est relié, une interrogation est faite au niveau de la mémoire locale du noeud si celle-ci détient de façon habituelle cette information sous sa forme originale, ou au niveau du cache partagé si cette information est habituellement détenue de façon originale par la mémoire locale d'un autre noeud. Si une information détenue de façon habituelle par la mémoire locale d'un autre noeud n'est pas disponible au niveau du cache partagé, le processeur de gestion de ce cache partagé interroge la mémoire locale du noeud qui détient habituellement cette information de façon originale. Les caches privés, les caches partagés et les mémoires locales peuvent donc être considérés comme une hiérarchie de mémoires. Chaque cache privé est une mémoire de niveau le plus élevé de la hiérarchie pour un noeud considéré, chaque cache partagé est une mémoire de second niveau de la hiérarchie pour le noeud considéré et chaque mémoire locale est donc une mémoire de second niveau de la hiérarchie pour le noeud considéré et de troisième niveau de la hiérarchie pour les autres noeuds.

Dans le mode de réalisation de la figure 2, la partie de mémoire générale associée au noeud a été subdivisée en deux mémoires locales, la mémoire locale paire 11.111 qui contient les informations à des adresses paires et qui est associée au bus local paire 10.111, et la mémoire locale impaire 11.112 qui contient des informations détenues aux adresses impaires et qui est reliée au bus local impair 1.112. De même, le cache partagé associé au noeud à été divisé en un cache partagé pair 12.111 contenant des copies d'informations d'adresses paires, et relié au bus local paire 10.111, et le cache partagé impair 12.112 contenant des copies d'informations à des adresses impaires et relié au bus local impair 10.112. Chaque mémoire locale et chaque cache partagé est relié à un bus réseau 13 assurant une liaison parallèle, respectivement 13.111 pour le bus réseau pair et 13.112 pour le bus réseau impair.

Les bus réseaux sont reliés à des contrôleurs de liaisons séries 14, respectivement 14.111, 14.112, 14.113 et 14.114 dans le mode de réalisation illustré. Les contrôleurs de liaisons séries 14 assurent un interface entre les bus réseaux et les liaisons séries 4 qui assurent les liaisons entre les noeuds. A cet effet, les contrôleurs de liaisons séries 14 sont reliés à chacun des bus réseaux 13. Dans le mode de réalisation illustré, chaque noeud est associé à d'autres noeuds, et aux organes d'entrée/sortie par un total de 15 liaisons séries. Les bus réseaux pourraient être reliés aux liaisons séries par un interface comportant un seul contrôleur de liaisons séries. Toutefois, pour des raisons technologiques, la puissance consommée serait trop importante et provoquerait un échauffement inacceptable de cette interface. C'est la raison pour laquelle l'interface entre les bus réseaux et les liaisons séries a été subdivisée en quatre contrôleurs de liaisons séries. Le nombre de contrôleurs de liaisons séries utilisé dépend bien entendu du nombre de liaisons séries qui doivent être raccordées à un noeud mais également du nombre de prises qu'il est acceptable de disposer sur les bus réseaux pour assurer la liaison entre ces bus réseaux et les contrôleurs de liaisons séries. Dans le mode de réalisation illustré on remarquera que chaque bus de type parallèle, qu'il s'agisse des bus locaux ou des bus réseaux est équipé de six prises, ce qui permet d'assurer un débit de messages suffisant sans augmenter de façon indue la complexité des protocoles de transmission de ces messages.

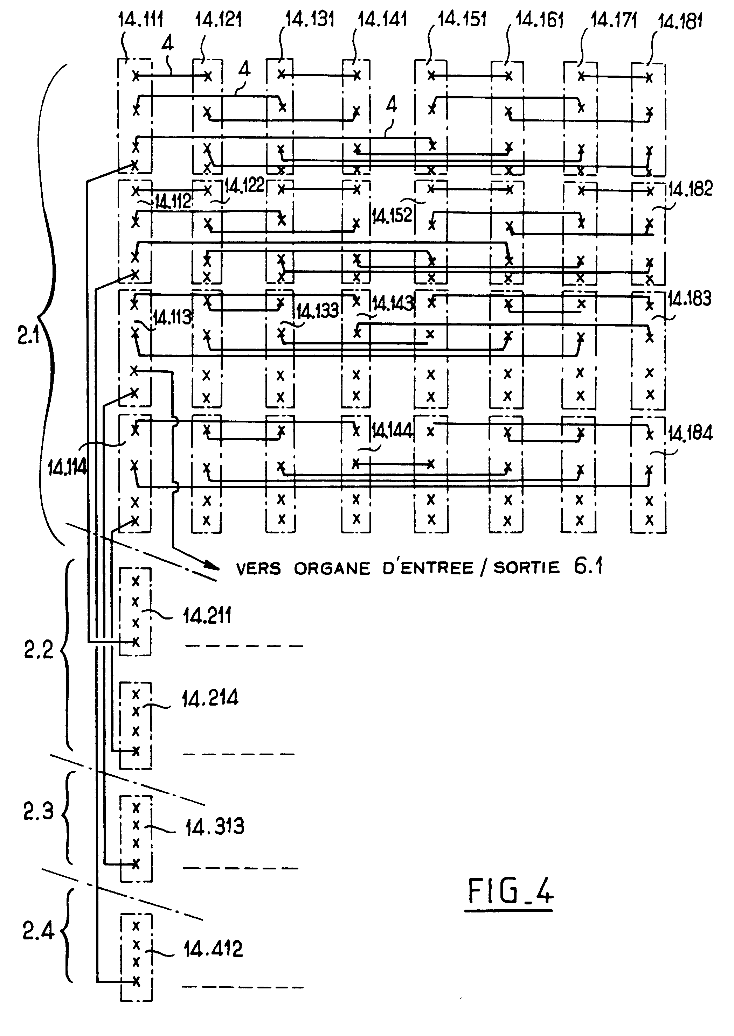

La figure 4 illustre la répartition des liaisons séries entre les contrôleurs de liaisons séries d'un même super noeud et avec les contrôleurs de liaisons séries des autres super noeuds auxquels un super noeud est associé. Les lignes entre les contrôleurs de liaisons séries et les bus réseaux n'ont pas été représentées. Pour des raisons de simplification du schéma on a seulement représenté sur la figure 4 la répartition des liaisons séries entre les contrôleurs de liaisons séries du premier super noeud 2.1 et, pour les liaisons avec les autres super noeuds on a représenté seulement la répartition des liaisons séries entre le noeud 1.11 et les contrôleurs de liaisons séries correspondants des autres super noeuds.

Sur cette figure, chaque contrôleur de liaisons séries est représenté par un rectangle en trait mixte et les connexions d'une liaison série 4 avec un contrôleur de liaisons séries sont représentées par un trait continu pour chaque liaison série simple. Par référence au système de numérotation adopté précédemment, le premier contrôleur de liaisons séries du noeud 1.11 porte la référence complète 14.111 tandis que le premier contrôleur de liaisons séries du noeud 1.12 porte la référence complète 14.121...... le second contrôleur de liaisons séries du noeud 1.11 porte la référence complète 14.112, le second contrôleur de liaisons séries du noeud 1.12 porte la référence complète 1.122....

A titre d'exemple, la liaison série double reliant le noeud 1.11 avec le noeud 1.12 est illustrée par une liaison série simple reliant le contrôleur de liaisons séries 14.111 et le contrôleur de liaisons séries 14.121 et une liaison série simple reliant le contrôleur de liaison séries 14.112 et le contrôleur de liaisons séries 14.122 ; la liaison série double reliant le noeud 1.11 au noeud 1.14 est illustrée par une liaison simple reliant le contrôleur de liaisons séries 14.113 au contrôleur de liaisons séries 14.143 et une liaison série simple reliant le contrôleur de liaisons séries 14.114 au contrôleur de liaisons séries 14.144 ; la liaison série double reliant le noeud 1.11 et le noeud 1.21 est illustrée par une liaison série simple reliant le contrôleur de liaisons séries 14.111 et le contrôleur de liaisons séries 14.211, et une liaison série simple reliant le contrôleur de liaisons séries 14.114 au contrôleur de liaisons séries 14.214. La liaison série simple reliant le noeud 1.11 au noeud 1.31 est illustrée par la liaison série simple reliant le contrôleur de liaisons séries 14.113 au contrôleur de liaisons séries 14.313, et la liaison série simple reliant le noeud 1.11 au noeud 1.41 est illustrée par la liaison série simple reliant le contrôleur de liaisons séries 14.112 au contrôleur de liaisons séries 14.412.

Le contrôleur de liaisons séries 14.113 comporte en outre une borne reliée au contrôleur de liaisons séries de l'organe d'entrée 6.1, et qui n'a pas été représenté sur la figure. Le contrôleur de liaisons séries 14.114 comporte une borne non affectée qui peut, le cas échéant, servir à assurer une liaison série double entre le noeud 1.11 et l'organe d'entrée/sortie 6.1.

On notera que les liaisons ainsi établies permettent d'aller d'un noeud quelconque à un autre noeud quelconque en utilisant seulement deux liaisons séries. A titre d'exemple on passe du noeud 1.11 au noeud 1.33 en utilisant d'abord l'une des liaisons séries du noeud 1.11 au noeud 1.13 puis la liaison série reliant le noeud 1.13 au noeud 1.33. De même on passe du noeud 1.35 au noeud 1.22 en utilisant la liaison série du noeud 1.35 au noeud 1.32 puis la liaison série du noeud 1.32 au noeud 1.22. Compte tenu du maillage du super noeud 5 d'organes d'entrée/sortie, cette propriété est également obtenue pour la liaison de l'un quelconque des organes d'entrée/sortie avec l'un quelconque des noeuds. On remarquera à ce propos qu'un organe d'entrée/sortie n'est pas habituellement destiné à fonctionner avec l'ensemble des noeuds et on peut donc économiser des liaisons en supprimant celles qui relient les organes d'entrée/sortie entre eux.

On remarquera à ce propos que pour simplifier les protocoles de routage des messages il est préférable d'utiliser systématiquement le même type de combinaison de chemins, par exemple, une liaison série à l'intérieur d'un super noeud avant une liaison série entre super noeuds. A ce propos on notera également que lorsque deux liaisons séries qui doivent être utilisées successivement ne sont pas reliées au même contrôleur de liaisons séries, le message transmis passe par le bus réseau du noeud intermédiaire. Dans le premier exemple donné ci-dessus un message va donc passer successivement dans la liaison série reliant les contrôleurs de liaisons séries 14.111 et 14.131, sur le bus réseau du noeud 1.13 pour aller du contrôleur de liaisons séries 14.131 au contrôleur de liaisons séries 14.133, puis du contrôleur de liaisons séries 14.133 au contrôleur de liaisons séries 14.333 du noeud 1.33.

La figure 3 illustre de façon partielle une variante de réalisation du noeud illustré sur la figure 2 permettant de multiplier par deux le nombre de processeurs du noeud sans augmenter le nombre de prises sur les bus locaux et sans changer par ailleurs les liaisons entre les noeuds. Dans cette variante de réalisation, chacun des processeurs et le cache privé qui lui est associé est remplacé par deux processeurs chacun associé à un cache privé. La figure 3 illustre le dédoublement du processeur 8.111 de la figure 2, un dédoublement identique étant bien entendu effectué pour les autres processeurs du même noeud afin de ne pas compliquer de façon indue la gestion des messages avec le noeud. Le processeur 8.111 est donc remplacé par un processeur 8.1111 et un processeur 8.1112 respectivement reliés à un cache privé 9.1111 et un cache privé 9.1112. Chaque cache privé est relié à deux interfaces 15 pour la liaison avec les bus locaux, un interface bus pair 15.1111 qui est relié au bus local pair 10.111 et un interface bus impair 15.1112 qui est relié au bus local impaire 10.112.

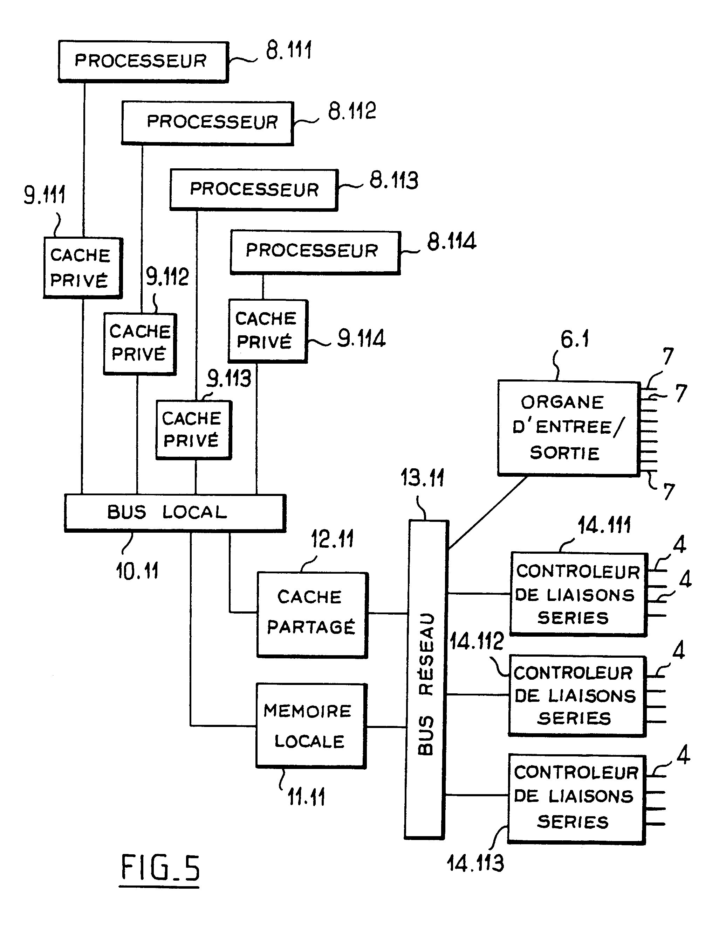

En relation avec la figure 2, on remarquera que le dédoublement des bus locaux et des bus réseaux en deux bus l'un associé aux adresses paires et l'autre associé aux adresses impaires permet de diminuer la latence des relations avec la mémoire locale et le cache partagé sans augmenter le nombre de prises au niveau de chaque bus du type parallèle. Lorsque la puissance des processeurs installés dans chaque noeud où le degré de partage des informations entre les noeuds ne justifie pas un ensemble aussi sophistiqué, on peut réaliser l'ensemble selon l'invention en prévoyant dans chaque noeud un seul bus local et un seul bus réseau associés à une seule mémoire locale et un seul cache partagé comme illustré par la figure 5. Dans ce mode de réalisation, le noeud comporte comme précédemment 4 processeurs 8.111, 8.112, 8.113 et 8.114 respectivement reliés à des caches privés 9.111, 9.112, 9.113 et 9.114 associés à un seul bus local 10.11 qui est lui-même relié à une seule mémoire locale 11.11 et un seul cache partagé 12.11. La mémoire locale et le cache partagé sont reliés à un bus réseau unique 13.11. On remarquera que dans cette configuration le bus local ne sert comme précédemment qu'à la transmission des messages nécessaires aux processeurs du noeud pour prélever les informations contenues dans la mémoire locale ou les copies d'informations contenues dans le cache partagé tandis que le bus réseau sert à la transmission des messages destinés à mettre à jour des informations de la mémoire locale ou du cache partagé, ou à amener dans le cache partagé les copies demandées par celui-ci d'informations contenues dans les mémoires locales des autres noeuds, ou à prélever dans la mémoire locale du noeud des informations demandées par les caches partagés des autres noeuds.

On remarquera également que le mode de réalisation illustré par la figure 5 correspond à une configuration inférieure à la configuration maximale, c'est-à-dire une configuration comportant un nombre de noeuds inférieur au nombre de noeuds représentés sur la figure 1 de sorte que le nombre de liaisons séries a été ramené à douze et le nombre de contrôleurs de liaisons séries a été ramené à trois. Dans ces conditions, le nombre de prises du bus réseau utilisées par la mémoire locale, le cache partagé et les contrôleurs de liaisons séries est de cinq seulement de sorte qu'il est alors possible de relier directement l'organe d'entrée/sortie 6.1 sur le bus réseau 13.11. Dans ce cas le contrôleur de liaisons séries de l'organe d'entrée/sortie 6.1 (non représenté sur la figure) sert seulement à assurer la gestion des messages sur les liaisons séries 7 réunissant les organes d'entrée/sortie entre eux.

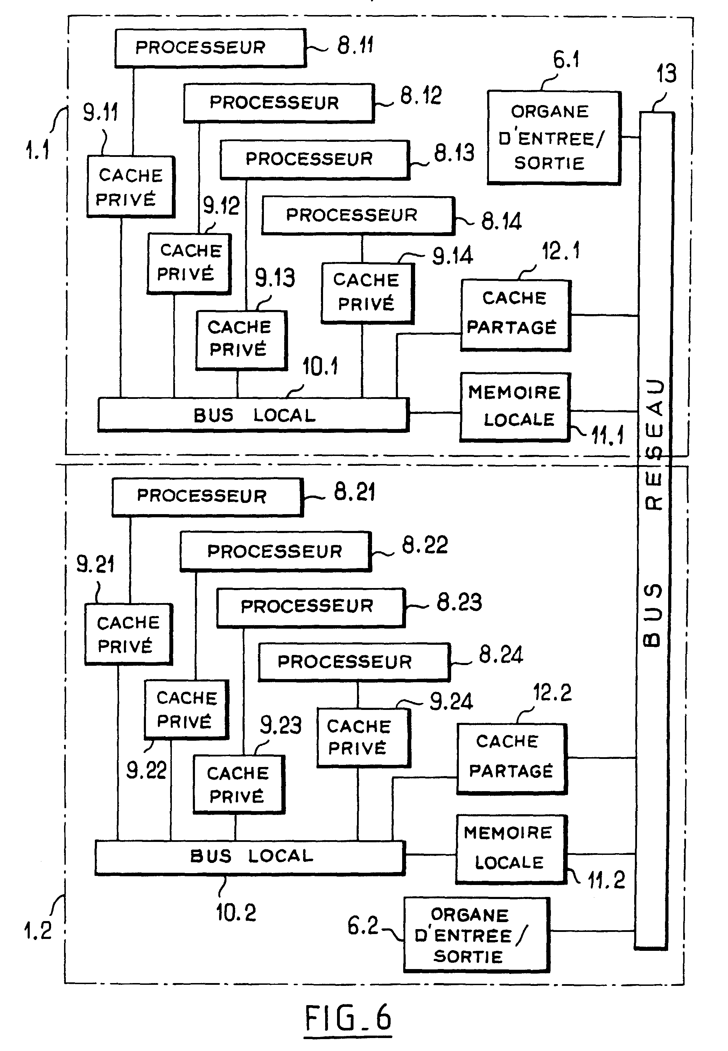

La figure 6 illustre une configuration encore plus simple ne comportant que deux noeuds 1.1 et 1.2 matérialisés par des cadres en traits mixtes sur cette figure. Comme précédemment, chaque noeud comporte 4 processeurs, respectivement référencés 8.11, 8.12, 8.13 et 8.14 pour le noeud 1.1; et 8.21, 8.22, 8.23 et 8.24 pour le noeud 1.2. Les processeurs sont respectivement reliés à des caches privés 9.12, 9.12.... et 9.21, 9.22.... eux-mêmes reliés à deux bus locaux, respectivement 10.1 et 10.2. Les bus locaux sont chacun relié à une mémoire locale, respectivement 11.1 et 11.2, et à un cache partagé, 12.1 et 12.2. Dans cette configuration, chaque noeud comporte également un organe d'entrée/sortie, respectivement 6.1 et 6.2. On constate qu'au lieu de prévoir un bus réseau dans chaque noeud et des liaisons séries entre les noeuds, il est alors plus avantageux de prévoir un bus réseau commun 13 qui est équipé de six prises comme dans les exemples précédents.

Bien entendu l'invention n'est pas limitée aux modes de réalisation décrits et on peut y apporter des variantes de réalisation sans sortir du cadre de l'invention tel que défini par les revendications.

En particulier on remarquera que le nombre de noeuds ou le nombre de super noeuds n'est pas déterminé de façon critique et la structure générale de l'ensemble informatique selon l'invention ou la structure des noeuds peut être avantageusement adaptée suivant les configurations à réaliser que l'on cherchera de préférence à équilibrer en utilisant les aspects de structure originaux de l'invention. A titre d'exemple, pour un ensemble informatique ayant une configuration évolutive de 1 à 8 processeurs, on utilisera de préférence la structure décrite en relation avec la figure 6, en réduisant celle-ci à un seul noeud pour une configuration allant de 1 à 4 processeurs. Pour un ensemble informatique ayant une configuration évolutive comprenant de 4 à 32 processeurs on réalisera de préférence une structure reproduisant la structure d'un super noeud selon l'invention. Pour une configuration évolutive comprenant de 8 à 64 processeurs on réalisera de préférence une structure comprenant deux super noeuds et pour une configuration comprenant de 16 à 128 processeurs on répartira de préférence ces processeurs selon quatre super noeuds, les liaisons séries correspondant à la configuration maximale étant de préférence installées dans la structure de base de la machine afin de permettre une modification aisée de la configuration, notamment pour effectuer une modification du branchement des liaisons en cas de défaillance d'une liaison série ou pour faire évoluer la configuration, aussi bien dans un sens de l'augmentation que de la diminution du nombre de microprocesseurs, sans qu'il soit nécessaire de modifier les interconnexions.

## Revendications

1. Système informatique à mémoire partagée présentant une configuration évolutive jusqu'à une configuration maximale et comprenant dans la configuration maximale un nombre prédéterminé de processeurs (8.111...8.114) regroupés selon des sous-ensembles (3.11,3.12) de noeuds (1.11...1.48), chaque sous-ensemble présentant une taille critique relativement à un débit de messages entre noeuds, le système comportant des moyens d'interconnexion comprenant des liaisons séries doubles pour relier entre eux les noeuds de chaque sous-ensemble pour transmettre lesdits messages et des liaisons séries simples pour relier les noeuds d'un sous-ensemble avec les noeuds d'autres sous-ensembles pour transmettre lesdits messages.

2. Système selon la revendication 1, dans lequel la configuration maximale est divisée en super-noeuds comprenant chacun deux sous-ensembles.

3. Système selon la revendication 2, dans lequel lesdits super-noeuds sont reliés par paire (2.1, 2.2; 2.3, 2.4) dans laquelle chaque noeud d'un super-noeud est connecté à un noeud d'un autre super-noeud pour former une paire de noeuds correspondants et les moyens d'interconnexion comprennent des liaisons séries doubles pour connecter lesdites paires de noeuds correspondants.

4. Système selon la revendication 3, dans lequel lesdites paires de noeuds correspondants dans une paire de super-noeuds correspondent auxdites paires de noeuds correspondants dans une autre paire de super-noeud, et lesdits moyens d'interconnexion comprennent des liaisons séries simples pour connecter chaque noeud de chacune desdites paires de noeuds correspondants dans ladite paire de super-noeud, aux deux noeuds de ladite paire de noeuds correspondants de ladite autre paire de super-noeuds.

5. Système selon l'une des revendications 3 ou 4, dans lequel lesdits noeuds ont des positions respectives (1.11) dans l'un desdits super-noeuds (2.1) et des positions correspondantes (1.31) avec lesdits noeuds d'un autre desdits super-noeuds (2.3) et ledit échange de message entre un noeud (1.11) d'un dit super-noeud (2.1) et un autre noeud (1.33) dudit autre super-noeud (2.3) est réalisé via le noeud (1.13) dans ledit super-noeud (2.1) qui correspond audit autre noeud (1.33).

6. Système selon l'une des revendications 1 à 5, dans lequel lesdits moyens d'interconnexion comprennent des contrôleurs de liaisons séries interconnectés les uns aux autres au travers d'au moins un bus dans le noeud correspondant, les contrôleurs de liaisons séries assurant une interface entre le bus et les liaisons séries assurant les liaisons entre noeuds.

7. Système selon l'une des revendications 1 à 6, dans lequel au moins une partie desdits noeuds sont connectés à des organes d'entrée/sortie au travers de liaisons séries simples.

8. Système selon la revendication 7, dans lequel lesdits organes d'entrée/sortie sont connectés les uns aux autres à l'aide de liaisons séries simples respectives.

9. Système selon l'une des revendications 1 à 8, dans lequel les moyens d'interconnexion correspondant à la configuration maximale sont installées dans la configuration de base d'une machine.

## Patentansprüche

1. Datenverarbeitungssystem mit gemeinsam genutztem Speicher, das eine bis zu einer Maximalkonfiguration erweiterbare Konfiguration aufweist und in der Maximalkonfiguration eine vorgegebene Anzahl von Prozessoren (8.111 ... 8.114) enthält, die in Untereinheiten (3.11, 3.12) von Knoten (1.11 ... 1.48) gruppiert sind, wobei jede Untereinheit eine kritische Größe in bezug auf den Nachrichtendurchsatz zwischen Knoten aufweist, wobei das System Verbindungsmittel enthält, die doppelte Serienverbindungen für die Verbindung der Knoten jeder Untereinheit miteinander für die Nachrichtenübertragung sowie einfache Serienverbindungen für die Verbindung der Knoten einer Untereinheit mit den Knoten anderer Untereinheiten für die Nachrichtenübertragung umfassen.

2. System nach Anspruch 1, in dem die Maximalkonfiguration in Oberknoten unterteilt ist, die jeweils zwei Untereinheiten enthalten.

3. System nach Anspruch 2, in dem die Oberknoten paarweise verbunden sind (2.1, 2.2; 2.3, 2.4), wobei jeder Knoten eines Oberknotens mit einem Knoten eines anderen Oberknotens verbunden ist, um ein Paar entsprechender Knoten zu bilden, und die Verbindungsmittel doppelte Serienverbindungen enthalten, um die Paare entsprechender Knoten zu verbinden.

4. System nach Anspruch 3, in dem die Paare entsprechender Knoten in einem Paar Oberknoten den Paaren entsprechender Knoten in einem anderen Paar Oberknoten entsprechen und die Verbindungsmittel einfache Serienverbindungen enthalten, um jeden Knoten jedes der Paare entsprechender Knoten in einem Oberknotenpaar mit zwei Knoten des Paares entsprechender Knoten des anderen Oberknotenpaars zu verbinden.

5. System nach einem der Ansprüche 3 oder 4, in dem die Knoten jeweilige Positionen (1.11) in einem der Oberknoten (2.1) und entsprechende Positionen (1.31) mit den Knoten eines anderen der Oberknoten (2.3) besitzen und der Nachrichtenaustausch zwischen einem Knoten (1.11) eines Oberknotens (2.1) mit einem anderen Knoten (1.33) des anderen Oberknotens (2.3) über den Knoten (1.13) im Oberknoten (2.1) ausgeführt wird, der dem anderen Knoten (1.33) entspricht.

6. System nach einem der Ansprüche 1 bis 5, in dem die Verbindungsmittel Serienverbindungs-Steuereinrichtungen enthalten, die miteinander über wenigstens einen Bus im entsprechenden Knoten verbunden sind, wobei die Serienverbindungs-Steuereinrichtungen eine Schnittstelle zwischen dem Bus und den die Verbindungen zwischen Knoten sicherstellenden Serienverbindungen sicherstellen.

7. System nach einem der Ansprüche 1 bis 6, in dem wenigstens ein Teil der Knoten über einfache Serienverbindungen mit Eingangs-/Ausgangselementen verbunden ist.

8. System nach Anspruch 7, in dem die Eingangs-/Ausgangs-Elemente mit Hilfe von jeweiligen einfachen Serienverbindungen miteinander verbunden sind.

9. System nach einem der Ansprüche 1 bis 8, in dem die Verbindungsmittel, die der Maximalkonfiguratiton entsprechen, in der Grundkonfiguration einer Maschine installiert sind.

## Claims

1. Shared-memory processing system having a configuration that can evolve up to a maximum configuration and comprising, in the maximum configuration, a predetermined number of processors (8.111 ... 8.114) grouped into sub-assemblies (3.11, 3.12) of nodes (1.11 ... 148), each sub-assembly having a critical size with respect to a flow rate of messages between nodes, the system comprising interconnection means comprising double serial links to connect together the nodes of each sub-assembly in order to transmit said messages and single serial links to connect the nodes of a sub-assembly with the nodes of other sub-assemblies in order to transmit said messages.

2. System according to Claim 1, in which the maximum configuration is divided into super-nodes each comprising two sub-assemblies.

3. System according to Claim 2, in which said super-nodes are connected in pairs (2.1, 2.2; 2.3, 2.4) in which each node of a super-node is connected to a node of another super-node in order to form a pair of corresponding nodes and the interconnection means comprise double serial links to connect said pairs of corresponding nodes.

4. System according to Claim 3, in which said pairs of corresponding nodes in a pair of super-nodes correspond to said pairs of corresponding nodes in another super-node pair, and said interconnection means comprise single serial links to connect each node of each of said pairs of corresponding nodes in said super-node pair, to the two nodes of said pair of corresponding nodes of said other pair of super-nodes.

5. System according to one of Claims 3 or 4, in which said nodes have respective positions (1.11) in one of said super-nodes (2.1) and corresponding positions (1.31) with said nodes of another of said super-nodes (2.3) and said message exchange between one node (1.11) of said one super-node (2.1) and another node (1.33) of said other super-node (2.3) is performed via the node (1.13) in said super-node (2.1) that corresponds to said other node (1.33).

6. System according to one of Claims 1 to 5, in which said interconnection means comprise serial link controllers interconnected with one another through at least one bus in the corresponding node, the serial link controllers providing an interface between the bus and the serial links providing the links between nodes.

7. System according to one of Claims 1 to 6, in which at least part of said nodes are connected to input/output members through single serial links.

8. System according to Claim 7, in which said input/output members are connected to one another using respective single serial links.

9. System according to one of Claims 1 to 8, in which the interconnection means corresponding to the maximum configuration are installed in the basic configuration of a machine.
